# EUROPEAN PATENT APPLICATION

(11) **EP 2 716 167 A1**
(43) Date of publication of application: **09.04.2014**
(21) Application number: 12006859.8
(22) Date of filing: 02.10.2012
(51) Int. Cl.: A23L 1/30

(54) **Non-pharmaceutical composition comprising short chain fatty acids**

(71) Applicant: Lunamed AG, 7000 Chur (CH)
(72) Inventor: The designation of the inventor has not yet been filed
(74) Representative: Zacco GmbH

(57) **Abstract**

The present invention refers to a non-pharmaceutical composition, especially a dietary supplement, comprising butyric acid and/or phenylacetic acid and/or its precursor 4-phenylbutyric acid or any salt thereof. The butyric acid, phenylacetic acid or the 4-phenylbutyric acid can be present within the dietary supplement as an inorganic or an organic salt, as a polymorph, hydrate or solvate thereof. The invention is further related to the use of said dietary supplement to improve or maintain health, especially for preventing cancer, and to a dietary regimen for said supplement.

## Description

### Field of the invention

The present invention refers to a non-pharmaceutical composition for oral administration, in particular a dietary supplement, comprising butyric acid and/or phenylacetic acid and/or its precursor 4-phenylbutyric acid or any salt, polymorph, hydrate or solvate thereof. The invention is further related to the use of said non-pharmaceutical composition to improve or maintain health, especially for preventing cancer, and to a dietary regimen for said supplement.

### Background of the invention

The increase in life expectancy in the Western countries from 1930 to 1980 can, in part, be attributed to the improvement in nutrition during that period. However, the situation today remains far from ideal, since six out of ten of the leading causes of death in the Western World, (including heart attack, cancer, cirrhosis of the liver, and diabetes), are linked to dietary excesses or deficiencies. It is thus becoming increasingly obvious that many of these common diseases can be prevented with a well-balanced diet and efficient nutritional supplementation with certain vitamins, minerals and nutrients.

The problem is particularly acute for cancer. With more than 3 million new cases and 1.7 million deaths each year, cancer represents the second most important cause of death and morbidity in Europe. On a global scale, cancer accounted for 7.4 million deaths (around 13% of the total) in 2004. When cancer begins it invariably produces no symptoms with signs and symptoms only appearing as the mass continues to grow or ulcerates. The transformation of normal cell into cancer is akin to a chain reaction caused by initial errors, which compound into more severe errors, each progressively allowing the cell to escape the controls that limit normal tissue growth. A dietary supplement that interferes with this chain reaction could prevent the cancer at a presymptomatic stage. According to the WHO at least one-third of all cancer cases are preventable. Furthermore, prevention offers the most cost-effective long-term strategy for the control of cancer.

Several dietary supplements are discussed as chemopreventive agents such as resveratrol, a stilbenoid found in red wine and the Japanese knotwood.

Further examples are catechin polyphenols from green tea which have been shown to inhibit proliferation of cultured mammalian cells including colon carcinoma, lung carcinoma, breast carcinoma, melanoma and leukemic cells (Lea et al., 1993, Cancer Lett. 68: 231-236, Valcic et al., 1996, Anticancer drugs 7: 461-468). DE 196 27344 discloses green tea extracts that have anticarcinogenic, antiviral, and antibacterial effects that may be useful for lowering lipid levels, protection of the liver, decreasing blood pressure and coagulation, and reducing blood level sugars.

However, there is still a need to provide a further non-pharmaceutical composition which have a positive influence on health and which prevent or delay critical diseases, especially cancer.

Accordingly, it was the goal of this invention to identify alternative non-pharmaceutical compositions.

It has now been found that butyric acid, 4-phenylbutyric acid or phenylacetic acid can be given as a non-pharmaceutical composition and especially as a dietary supplement.

### Summary of the invention

In the first aspect the invention relates to a non-pharmaceutical composition for oral administration comprising in a dosage unit butyric acid and/or phenylacetic acid and/or its precursor 4-phenylbutyric acid and any salt, polymorph, hydrate or solvate thereof.

Phenylacetic acid is known as an natural endogenous auxin, derived found in several nutrionally essential plants such as Triticum aetivum (wheat), Pisum sativum (pea), Zea mays, Lycopersicon esculentum (tomato), hordeul vulgare (barley) and Helianthus annus (sunflower) (Wightman and Lighty, 1982, Physiol. Plant. 55: 17-24). It is generated from the natural occurring amino acid L-phenylalanine via the intermediate phenylpyruvic acid.

It is also employed to treat type II hyperammonemia to help reduce the amounts of ammonia in a patient's bloodstream by forming phenylacetyl-CoA, which then reacts with nitrogen-rich glutamine to form phenylacetylglutamine. This compound is then secreted by the patient's body.

Phenylbutyric acid, especially 4-phenylbutyric acid as depicted in formula (I) is a histone deacetylase inhibitor that is known as a pharmaceutically active component for many years. Butyric acid is a naturally occurring fatty acid derived from a high fiber diet and is produced in the large bowel by bacterial fermentation. Butyric acid is also present at low levels in many fruit and vegetables, but its richest source is milk fat (Parodi 1997, J. Nutr. 127:1055-1060; Newmark and Young, 1995, J. Cell. Biochem 22: 247-253). Colonic generation of butyrate has been associated with the protective effect of dietary fiber for colon cancer (Parodi 1997, J. Nutr. 127:1055-1060; Archer and Hodin 1999, Genet.Dev. 9: 171-174). Hence, butyric acid and phenylacetic acid can be regarded as secondary plant metabolites or phytochemicals exhibiting multiple nutritional and physiological effects.

The use of the butyric acid, 4-phenylbutyric acid and phenylacetic acid in a non-pharmacological composition is based on the recognition that these three compounds exhibit their beneficial activity also when present in very low amounts. Hence, a composition comprising these compounds have to be regarded as a food supplement within the meaning of Article 2(a) of Directive 2002/46/EC of the European Parliament and of the Council of 10 June 2002 on the approximation of the laws of the Member States relating to food Supplements (see EuGH case C-319/05, decision from Nov. 15, 2007 - "Knoblauchkapsel").

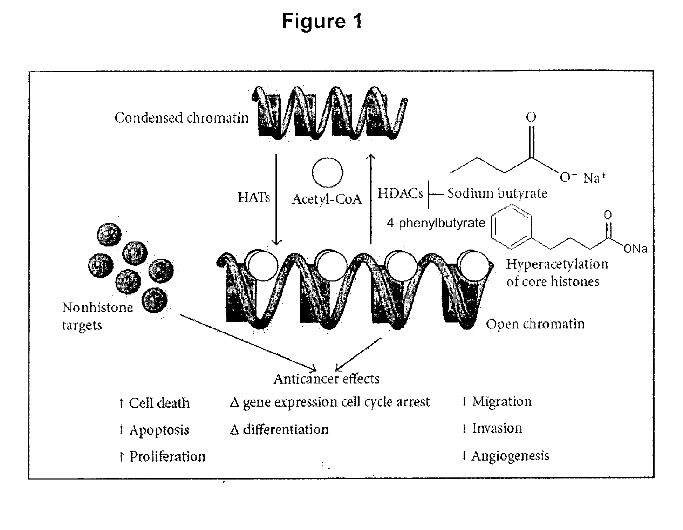

Histone deacetylases (HDACs) have been extensively studied for their roles in transcriptional regulation and chromatin remodelling (see Figure 1). HDACs are divided into four classes, according to sequence homology and domain organization (Dokmanovic et al. (2007) Mol. Cancer Res. 5: 981-989). Class I includes, for example, HDACs 1, 2, 3, and 8; class IIa includes, for example, HDACs 4, 5 7 and 9; class IIb includes HDACs 6 and 10, class III includes HDACs SIRT 1, 2, 3, 4, 5, 6 and 7, and class IV includes HDAC11.

HDACs have also drawn research interest because inhibitors of these enzymes display anti-tumour activities (reviewed in Drummond et al., 2005, Ann. Rev. Pharmacol. Toxicol. 45: 495-528). Certain HDAC inhibitors (HDACi) are at various stages of clinical trials for cancer patients, and at least one (SAHA/vorinostat) has been approved for clinical use (Gallinari et al. (2007) Cell Res 17: 195-211).

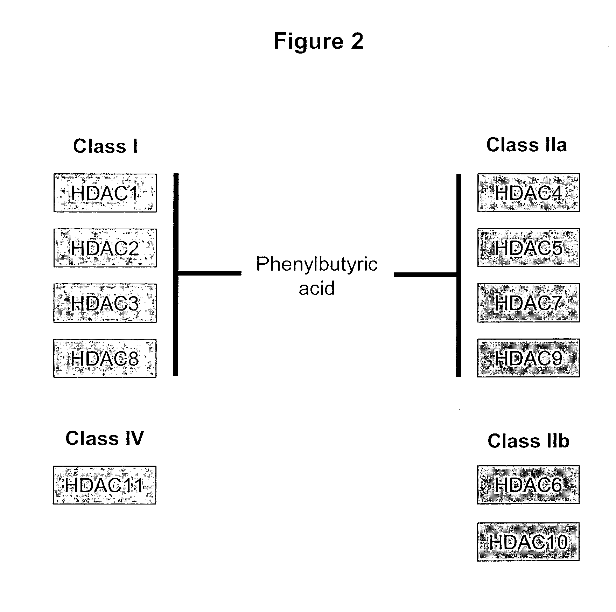

As depicted in Figure 2 the compound 4-phenylbutyric acid has been shown to inhibit a broad range of altogether 8 out of 18 known HDACs, namely HDAC1, 2, 3 and 8 from class I and HDAC 4, 5, 7 and 9 from class IIa. Noticeably, the HDACs from class III, the so-called sirtuins have not been found to be inhibited by phenylbutyric acids. Since these HDACs are discussed for a role in metabolism and longevity (resveratrol is a sirtuin activator) the lack of inhibition represents a beneficial selectivity for the phenylbutyric acids.

Histone deacetylase inhibitors such as phenylbutyric acids lower the apoptotic threshold of neoplastic cells. During transformation, neoplastic cells reach a state of apoptotic homeostasis whereby the activity of activated pro-apoptotic proteins is counterbalanced by elevated expression/activation of anti-apoptotic proteins to ensure tumour cell survival. It was found that neoplastic cells treated with the histone deacetylase inhibitor phenylbutyric acid generally upregulate pro-apoptotic genes involved in the death receptor pathway (for example, TRAIL and DR5) and/or the intrinsic apoptotic pathway (that is, Bax, Bak and APAF1), whereas prosurvival genes (that is, BCL2 and XIAP) are generally down regulated, thereby lowering the apoptotic threshold within the treated cell.

In addition to regulating the acetylation state of histones, histone deacetylase (HDAC) can bind to, deacetylate and regulate the activity of a number of other proteins, including transcription factors (e.g. p53, E2F transcription factor 1 (E2F1) and nuclear factor-κB (NF-κB)) and proteins with diverse biological functions (e.g. α-tubulin, Ku70 and heat-shock protein 90 (Hsp90)). Hyperacetylation of transcription factors with HDAC inhibitors (HDACi) can augment their gene-regulatory activities and contribute to the changes in gene expression observed following direct HDACi mediated histone hyperacetylation. Hyperacetylation of proteins such as Ku70 and Hsp90 or disruption of protein phosphatase 1 (PP1)-HDAC interactions by HDACi might have no direct or indirect effect on gene expression but could be important for certain biological effects of HDACi, in particular the induction of apoptosis and cell cycle arrest.

In sum, the HDACi 4-phenylbutyric acid can prevent cancerogenesis through multiple biological effects (see Figure 1).

The scientific basis for the use of a histone deacetylase inhibitor is the progression of cells from a normal homogenous state to more and more heterogeneity as carcinogenesis evolves. Therefore, more cells can be affected by treatment in early stages of carcinogenesis when they are more homogenous than in later heterogeneous stages.

Hence, within the context of the present invention 4-phenylbutyric acid exhibits two different roles:
1. It represents a precursor for the plant-derived auxin phenylacetic acid since it is converted *in vivo* into phenylacetic acid by β-oxidation.
2. As a histone deacetylase inhibitor 4-phenylbutyric acid itself it has a cancer preventing activity.

Since the histone deacetylases as targets for phenylbutyric acid represent a ubiquitously expressed protein family the non-pharmaceutical composition of the invention should be capable to prevent cancer from each cancer type.

Due its proven and established safety, butyric acid, phenyl acetic acid and its precursor 4-phenylburyric acid can be given in a non-pharmaceutical composition.

It has to be emphasised that the lack of toxicity allows that butyric acid, 4-phenylbutyric acid or the phenylacetic acid can be given over a long period of time which is crucial for a dietary supplement.

Noticeably, butyric acid, phenylacetic acid or 4-phenylbutyric acid do not show relevant interactions with other drugs, so that the concomitant use of other medicaments does not preclude their use as a non-pharmaceutical compound.

In addition there are no critical food interactions reported for butyric acid, phenylacetic acid or 4-phenylbutyric acid. This eases the application and therewith enhances the patient compliance.

Finally, non-responders for butyric acid, phenylacetic acid or 4-phenylbutyric acid have not reported e.g. due to differences in metabolism. This allows a broad application without selecting responsive consumer subgroups.

As relatively inexpensive compounds the butyric acid, the phenylacetic acid, as well as the 4-phenylbutyric acid, especially when given chronically, represents an affordable dietary supplement and therefore are superior also from an economic point of view.

### Detailed description of the invention

In a first embodiment of the invention the non-pharmaceutical composition is selected from the group consisting of a nutraceutical, a dietary supplement, a natural health product, a nutritional supplement, a food supplement, an alternative medicine product, or a naturopathic product.

In a preferred embodiment, the non-pharmaceutical composition is a dietary supplement.

In one embodiment of the invention, the non-pharmaceutical composition contains 4-phenylbutyric acid as short chain fatty acid, preferably as a salt thereof.

In an alternative embodiment of the invention, the non-pharmaceutical composition contains phenylacetic acid as short chain fatty acid, preferably as a salt thereof.

In a further embodiment of the invention, the non-pharmaceutical composition contains butyric acid as short chain fatty acid, preferably as a salt thereof.

In another alternative embodiment of the invention, the non-pharmaceutical composition contains a mixture of 4-phenylbutyric acid and phenylbutyric acid, preferably as a salt thereof.

In another embodiment and aspect of the invention, the non-pharmaceutical composition comprises a salt of 4-phenyl-butyric acid with a salt-forming organic molecule. In one embodiment the salt of 4-phenyl-butyric acid with the salt-forming organic molecule is in amorphous or crystalline form, preferably in crystalline form.

In a preferred embodiment the pharmaceutical composition according to the invention comprises a pharmaceutically acceptable salt of butyric acid, phenylacetic acid or 4-phenylbutyric acid whereby the pharmaceutically acceptable salt is preferably selected from the group consisting of sodium, potassium, ammonium, lithium calcium, magnesium, zinc, iron, monoethanolamine, diethanolamine, triethanolamine, lysine, arginine, and tromethamine. For a review of pharmaceutically acceptable salts see P. H. Stahl and C. G. Wermuth, editors, Handbook of Pharmaceutical Salts: Properties, Selection and Use, Weinheim/Zürich: Wiley-VCH, 2002, incorporated herein by reference.

In a further preferred embodiment said salt is a physiologically acceptable salt of phenylacetic acid or 4-phenyl-butyric acid of the earth or earth alkaline type, most preferably is a lithium, sodium, magnesium or calcium, and specifically the sodium salt of 4-phenyl-butyric acid.

In an embodiment of the invention the salt of 4-phenyl-butyric acid is an organic salt according to general formula II: 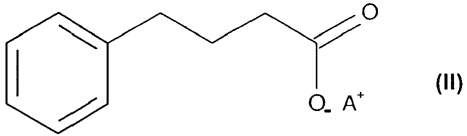 , wherein
A⁺ is selected from positively charged ions of a salt-forming organic molecule.

In a further embodiment of the invention the salt of phenylacetic acid is an organic salt according to general formula III: 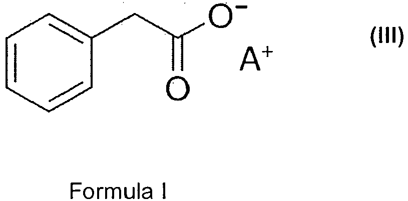 , wherein
A⁺ is selected from positively charged ions of a salt-forming organic molecule.

In a still further embodiment of the invention the salt of butyric acid is an organic salt according to general formula IV: 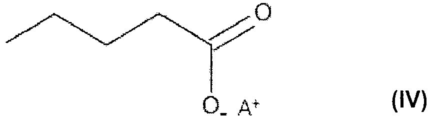 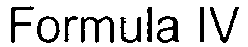 , wherein
A⁺ is selected from positively charged ions of a salt-forming organic molecule.

"Salt-forming organic molecule" as used herein is defined as any organic molecule, preferably an amine, amino-acid or heterocycle, preferably an amine, which is able to become ionized and with which butyric acid, phenylacetic acid or 4-phenyl butyric acid is able to form a salt.

### Formulation

In another embodiment of the invention the formulation of the non-pharmaceutical composition is selected from the group consisting of a tablet, a powder, a suspension, an emulsion, a capsule, a granule, a troche, a lozenge, a tablet, a liquid, a spirit, a syrup, an elixir and a drink.

In a preferred embodiment the non-pharmaceutical composition is formulated as a capsule (which can be a soft or hard capsule) or as a tablet.

If administered as a capsule, tablet or powder, an amount of the constituents is mixed in accordance with standard pharmaceutical practice to form a dosage unit that can be swallowed by taking water with the dosage unit. In general the size of the tablet will be less than about 2.5 grams, and preferably less than 1 gram to maximize the ease of swallowing.

The capsules or tablets can be prepared by conventional means with pharmaceutically acceptable excipients such as binding agents, fillers, lubricants, disintegrants or wetting agents. Examples of specific compounds for use in formulating compounds are described in detail in the Pharmacopoea Europaea (Ph. Eur.). Tablets comprising the short chain fatty acids of the invention can also be coated by methods well known in art.

Liquid preparation for oral administration can also be used. Liquid preparations can be in the form of solutions, syrups or suspensions or a dry product for reconstitution with water or another suitable vehicle before use. Such liquid preparations can be prepared by conventional means with pharmaceutically acceptable additives such as suspending agents, emulsifying agents, non-aqueous vehicles, and preservatives. Again, specific additives are well known to those of skill and are listed in places such as the Pharmacopoea Europaea (Ph. Eur.). In one embodiment, the oral preparation is formulated to provide controlled time release of the active neutraceutical components. For buccal administration the short chain fatty acids of the invention can be formulated as a tablet, lozenge or film.

The formulation of the non-pharmaceutical composition according to the present invention may also comprise an enteric coating, so that their dissolution is dependent on pH-value. Due to said coating the short chain fatty acids may pass the stomach undissolved and the respective salts or their respective crystalline form is liberated in the intestinal tract. Preferably the enteric coating is soluble at a pH value of 5 to 7.5. Suitable materials and methods for the preparation are known from the prior art.

Typically, the non-pharmaceutical compositions according to the present invention may contain 1-60 % by weight of one or more of the salts or their crystalline form as defined herein and 40-99 % by weight of one or more auxiliary substances (additives/excipients).

In one embodiment of the invention the non-pharmaceutical composition according to the invention is formulated in a dosage unit containing between 50 to 2000 mg of butyric acid, phenylacetic acid or 4-phenybutyric acid, preferably between 100 to 1000 mg and most preferably between 250 to 750 mg per dosage unit.

In a further embodiment the non-pharmaceutical composition further comprises one or more compounds selected from the group consisting of a flavoring, a sweetener, a nutritional ingredient, a botanical extract, and a coloring.

The non-pharmaceutical composition is suitable for use on a regularly basis, preferably on a daily basis.

### Bioavailability Enhancer

In order to further enhance the systemic levels of nutrients within the context of this invention, the formulation of this invention optionally contains an additional nutrient, absorption enhancer effective amount of an alkaloid extract of piperine. This compound is available commercially from Sabinsa Corporation (Piscataway, NJ) under the brand name, "Bioperine". This commercial product, which is an acceptable source of the piperine extract, is derived from black pepper and reportedly contains at least 95% alkaloid piperine. This product is also reportedly described in US 5,536,506, which is herein incorporated by reference in its entirety. This compound is effective to enhance the bioavailability of the active ingredients of the formulation when present at a concentration ranging from about 0.1 to about 1.0 weight percent.

### Further optional ingredients

The non-pharmaceutical composition according to any of the above claims further comprises at least one portion of the group selected from a vitamin portion, a mineral portion and optionally an omega-3 fatty acid portion and wherein the content amounts of each of the selected vitamins, minerals and omega-3 fatty acid content which are proportionally selected in accordance with the recommended daily amounts (RDA).

In one embodiment of the invention the non-pharmaceutical composition comprises one or more vitamins selected from the group consisting of β-carotene, vitamin A, vitamin B₁, vitamin B₂, vitamin B₃, vitamin B₅, vitamin B₆, biotin, vitamin B₉, vitamin B₁₂, vitamin C, vitamin D, vitamin E and vitamin K.

In a preferred embodiment of the invention the dosage unit for use on a daily basis comprises one or more vitamins in the respective ranges selected from the list containing 0.8 to 1 mg vitamin A, 1.1 to 1.8 mg vitamin B₁, 1.4 to 2.0 mg vitamin B₂, 15 to 20 mg vitamin B₃, 6 to 10 mg vitamin B₅, 1.4 to 2.1 mg vitamin B₆, 0.25 mg biotin, 0.16 to 0.40 mg folic acid, 1 to 3 µg vitamin B₁₂, 30 to 100 mg vitamin C, 5 µg vitamin D, 10 to 15 mg vitamin E and 0.075 to 2.0 mg vitamin K.

In a further preferred embodiment of the invention the dosage unit for use on a daily basis contains vitamins in the respective ranges: 0.8 to 1 mg vitamin A, 1.1 to 1.8 mg vitamin B₁, 1.4 to 2.0 mg vitamin B₂, 15 to 20 mg vitamin B₃, 6 to 10 mg vitamin B₅, 1.4 to 2.1 mg vitamin B₆, 0.25 mg biotin, 0.16 to 0.40 mg folic acid, 1 to 3 µg vitamin B₁₂, 30 to 100 mg vitamin C, 5 µg vitamin D, 10 to 15 mg vitamin E and 0.075 to 2.0 mg vitamin K.

In another embodiment the non-pharmaceutical composition represents a dosage unit for use on a daily basis which comprises one or more salt cations in the respective ranges selected from the list containing 40µg chrome, 1 mg copper, 800 mg calcium, 55 µg selenium, 10 mg zinc, 40 mg iron, 2 mg manganese, and 50 µg molybdenum.

In further preferred embodiment the non-pharmaceutical composition represents a dosage unit for use on a daily basis which contains the following salt cations in the respective ranges: 40µg chrome, 1 mg copper, 800 mg calcium, 55 µg selenium, 10 mg zinc, 40 mg iron, 2 mg manganese, and 50 µg molybdenum.

In a further embodiment of the invention, the unit dosage form for use on a daily basis comprises 1.0 to 2.0 g of omega-3 fatty acid, preferably being α-linolenic acid (ALA), eicosapentaenoic acid (EPA), or docosahexaenoic acid (DHA) or any mixture thereof.

Other natural ingredients contemplated within the scope of this invention and which are reported to contribute, in a supporting role, to abatement of the one or more of the components of the disease complex referred to herein as "cancer" are as follows: resveratrol, green tea extract, yakuchinone A, yakuchinone B, capsaicin, dibenzoylmethane, piperine, kahweol, grayanotoxan, kauran, atisan, giberellan, indiruibin-3'-monoxime, caffeic acid, caffeic acid phenethyl ester (CAPE), emodin, linalol, quinic acid, garcinol, sesamin, theaflavin-3,3'-digallate, sanguinarine, silymarin, mangostin, mangiferin, butein, berberine, glabridin, carnosol, β-lapachone, evodiamine, wogonin, tanshinones IIA, tanshinones I, carnosol, zerumbone, sulforaphane, phytic acid, ascorbic acid, anethole, indole 3-carbinol, thymoquinone and plumbagin.

In a further preferred embodiment of the invention the non-pharmaceutical composition further comprises one or more of the above listed natural cancer-preventing ingredients.

### Intended use

In another aspect of the invention the non-pharmaceutical composition according to the invention is used to improve the health of the subject, particularly the sexual, mental or physical health.

The pharmaceutical composition of the invention is applied to a mammal, preferably a pet or livestock and more preferably a human.

The preferred daily dose for the intended use is between 50 to 2000 mg of butyric acid, phenylacetic acid or 4-phenybutyric acid, preferably between 100 to 1000 mg and most preferably between 250 to 750 mg per subject per day and even more preferably is 500 mg/subject/day.

In another embodiment the non-pharmaceutical composition of the invention is used to prevent or delay the onset of age-related diseases.

Examples for such age-related diseases include, but are not limited to Alzheimer's disease, cancer, diabetes, heart disease, macular degeneration and Parkinson's disease.

In a preferred embodiment of the invention the disease which is prevented by the non-pharmaceutical composition is cancer.

In a further embodiment the cancer or malignant tumour, either primary or secondary, that can be prevented by the non-pharmaceutical compositions of the present invention include, but are not limited to, leukaemia, breast cancer, skin cancer, bone cancer, prostate cancer, liver cancer, lung cancer, brain cancer, cancer of the larynx, gallbladder, pancreas, rectum, parathyroid, thyroid, adrenal, neural tissue, head and neck, colon, stomach, bronchi, kidneys, basal cell carcinoma, squamous cell carcinoma of both ulcerating and papillary type, metastatic skin carcinoma, osteo sarcoma, Ewing's sarcoma, veticulum cell sarcoma, myeloma, giant cell tumour, small-cell lung tumour, gallstones, islet cell tumour, primary brain tumour, acute and chronic lymphocytic and granulocytic tumours, hairy-cell tumour, adenoma, hyperplasia, medullary carcinoma, pheochromocytoma, mucosal neuromas, intestinal ganglioneuromas, hyperplastic corneal nerve tumour, marfanoid habitus tumour, Wilms' tumour, seminoma, ovarian tumour, leiomyomata, cervical dysplasia and in situ carcinoma, neuroblastoma, retinoblastoma, soft tissue sarcoma, malignant carcinoid, topical skin lesion, mycosis fungoide, rhabdomyosarcoma, Kaposi's sarcoma, osteogenic and other sarcoma, malignant hypercalcemia, renal cell tumour, polycythermia vera, adenocarcinoma, glioblastoma multiforme, leukemias, lymphomas, malignant melanomas, epidermoid carcinomas, and other carcinomas and sarcomas.

Generally, cells in benign tumours retain their differentiated features and do not divide in a completely uncontrolled manner. A benign tumour is usually localized and nonmetastatic. Specific types of benign tumours that can be prevented by the non-pharmaceutical composition of the present invention include hemangiomas, hepatocellular adenoma, cavernous haemangioma, focal nodular hyperplasia, acoustic neuromas, neurofibroma, bile duct adenoma, bile duct cystanoma, fibroma, lipomas, leiomyomas, mesotheliomas, teratomas, myxomas, nodular regenerative hyperplasia, trachomas and pyogenic granulomas. In the case of malignant tumours, cells become undifferentiated, do not respond to the body's growth control signals, and multiply in an uncontrolled manner. Malignant tumours are invasive and capable of spreading to distant sites (metastasizing). Malignant tumours are generally divided into two categories: primary and secondary. Primary tumours arise directly from the tissue in which they are found. Secondary tumours, or metastases, are tumours that originated elsewhere in the body but have now spread to distant organs. Common routes for metastasis are direct growth into adjacent structures, spread through the vascular or lymphatic systems, and tracking along tissue planes and body spaces (peritoneal fluid, cerebrospinal fluid, etc.).

In a further preferred embodiment of the invention the cancer to be prevented by the non-pharmaceutical composition according to the invention is selected from the group consisting of non-Hodgkin's lymphoma, melanoma, leukemia, multiple myeloma, Hodgkin's Disease, skin, lung, breast, prostate, colon, rectal, pancreatic, bladder, kidney, uterine, bile duct, mouth, throat, stomach, ovarian, brain, thyroid, cervical, esophageal, laryngeal, and testicular cancer.

In one embodiment, the non-pharmaceutical composition of the invention can be used for prevention of diseases associated with undesired and uncontrolled cell proliferation by administering to a subject suffering from uncontrolled cell proliferation a physiologically effective amount of the non-pharmaceutical composition comprising butyric acid and/or phenylacetic acid and/or phenylbutyric acid.

The non-pharmaceutical composition of the invention can be used to prevent or delay the onset of one or more age-associated declines.

The utilization of the non-pharmaceutical composition of the invention, allows an individual to escape or at least delay the onset of inherited diseases and age-associated declines in vision, hearing, and memory loss and other age-associated physiological declines.

### Dietary Regimen

The composition is administered for a time sufficient to reduce or control the symptoms of health discomforts. One or two doses of the composition may be sufficient, or the composition may be administered on an ongoing basis for several days or weeks, even months in duration. Variables related to the amount of the composition to be administered include the severity of symptoms and the body weight of the subject. Typically, the composition is administered at a dosage of between 100 to about 2000 mgs of the butyric acid, phenylacetic acid or 4-phenylbutyric acid. The amount of alkaloid extract of piperine per dose, when present, is preferably in the range of from about 0.004 to 0.08 mg/kg of body weight. The formulation of this invention may be administered, if desired, in divided doses, such as twice per day, three times a day, or four times a day.

### DEFINITIONS

The term "non-pharmaceutical compositions" refers to a composition that it suitable for oral administration, whereby the composition does not require drug-related marketing authorization of one or more regulatory authorities such as the European Medicines Agency (EMEA), the "Bundesinstitut für Arzneimittel und Medizinprodukte (BfArM) in Germany, the Swissmedic in Switzerland, the Federal Drug Administration (FDA) in U.S.A., "Health Canada" in Canada, or the "Pharmaceuticals and Medical Device Agency" in Japan.

As used herein the term "polymorph" denotes to a different crystalline forms of the same drug substance.

The term "salt" is to be understood as meaning any form of butyric acid, phenylacetic acid or 4-phenylbutyric acid used according to the invention in which it assumes an ionic form or is charged and is coupled with a counter-ion (a cation or anion) or is in solution. By this are also to be understood complexes of the butyric acid, phenylacetic acid or 4-phenylbutyric acid with other molecules and ions, in particular complexes which are complexed via ionic interactions.

"Hydrate" is defined as a substance/joint mixture according to the invention containing water. Thus, it may be a crystalline salt with one or more water molecules in the crystalline structure or also amorphous containing water molecules.

"Solvate" is defined as a substance/joint mixture according to the invention containing a further solvent. One most prominent example of the solvents is an alcohol like ethanol or methanol thus leading to methanolates or ethanolates. Thus, it may be a crystalline salt with one or more alcohol molecules in the crystalline structure or also an amorphous form containing alcohol molecules.

A "nutraceutical" within the context of the invention is defined as a product isolated or purified or isolable from foods that is generally sold in medicinal forms not usually associated with food. A nutraceutical is demonstrated to have a physiological benefit or provide protection against chronic disease.

The term "dietary supplement" which is synonymous to the term "nutritional supplement" as used herein relates to a preparation intended to supplement the diet and provide nutrients, such as vitamins, minerals, fiber, fatty acids, or amino acids, that may be missing or may not be consumed in sufficient quantities in a person's diet. Some countries define dietary supplements as foods, while in others they are defined as natural health products. For example, the European Union's Food Supplements Directive of 2002 requires that supplements be demonstrated to be safe, both in dosages and in purity.

Within the context of the invention a "natural health product (NHP)" is defined as vitamins and minerals, herbal remedies, homeopathic medicines, traditional medicines (like Traditional Chinese Medicines), probiotics, and other products like amino acids and essential fatty acids. A natural health product must be safe to be used as an over-the-counter product. Natural health products are available for self-care and self-selection, and do not require a prescription to be sold.

The term "food supplement" as used in the context of the present invention relates to concentrated sources of nutrients or other substances with a nutritional or physiological effect whose purpose is to supplement the normal diet. They are marketed in dosage unit form i.e. as pills, tablets, capsules, liquids in measured doses etc.

In the present invention the term "alternative medicine product", relates to a product that promotes self-care and self-healing of the subject.

A used herein the term "naturopathic product" denotes a product that emphasizes prevention and the self-healing process through the use of natural compounds.

The term "short chain fatty acids" as used herein denotes to the three carbonic acids butyric acid, 4-phenylbutyric acid and phenylacetic acid.

### EXAMPLES

In the following, a detailed description of some preferred embodiments of a tablet containing a nutritional composition is presented.

### Example 1

A nutritional composition according to the invention is produced in a basic tablet product. The content of the tablet is chosen in accordance with the RDA of the individual active minerals and vitamin substances of the ingredients and in such a way that a high proportional content of butyric acid, 4-phenylbutyric acid or phenylacetic acid is contained in the tablet. The contents are listed in table 1. The amount of excipients is sufficient to produce the composition in a tablet form. The excipients could be e.g. starch, microcrystalline cellulose, polyvidon and magnesium stearate.

### Example 2

In example 2, an alteration on the basis of the basic product is made in order to direct the nutritional supplement towards the needs for sportsmen and the like. In comparison with the basic compound, the amounts of iodine and selenium are increased, just as the amounts of vitamins B1, B2 , B5 and B6 are increased. The amount of 4-phenylbutyric acid remains at about 60 % in the preferred composition. The amount of excipients is slightly reduced but still sufficient in amount to produce a tablet of the composition.

### Example 3

Similar to example 2, in example 3 the basic product is also directed towards a specific category of users. The tablet in this example is intended for elderly people. Here, the amounts of calcium, magnesium, zinc, iron and chrome are increased. The amounts of beta-carotene, pantothenic acid, vitamin B12, folic acid, vitamin D3 and E are also increased in comparison with the basic product. The amounts of 4-phenylbutyric acid are kept the same, but the excipients are reduced but not below a critical level for being able to produce the composition in a tablet form.

**Table 1:**

| Comparative table of the compositions in the examples | | | | |
|---|---|---|---|---|
| | **Example 1** | | **Example 2** | **Example 3** |
| **Product type:** | Basic tablet product | | Tablet for Sportsmen | Tablet for Elderly |
| | Amount | pct by weight of active substance | pct by weight of active substance | pct by weight of active substance |
| **Minerals:** | | | | |
| Calcium carbonate | 250 mg | 10 % | 10 % | 11 % |
| Magnesium hydroxide | 91.5 mg | 3.75 % | 3.75 % | 4.125 % |
| Zinc oxide | 4.7 mg | 0.375 % | 0.375 % | 0.4125 % |
| Ferrofumarate | 18.8 mg | 0.35 % | 0.475 % | 0.475 % |
| Potassium jodide | 491 µg | 0.00375 % | 0.00562 % | 0.00562 % |
| Sodium selenite | 41.7 µg | 0.00125 % | 0.00125 % | 0.00187 % |
| Chrome chloride | 64 µg | 0.00125 % | 0.00187 % | 0.00125 % |

| **Vitamins:** | | | | |
|---|---|---|---|---|
| Betatab 20% (β-carotene) | 7.2 mg | 0.12 % | 0.12 % | 0.18 % |
| Vitamin B1 | 0.40 mg | 0.035 % | 0.0475 % | 0.035 % |
| Riboflavin | 0.44 mg | 0.04 % | 0.06 % | 0.04 % |
| Niacin amide | 4.5 mg | 0.45 % | 0.45 % | 0.45 % |
| calcium pantothenate | 1.88 mg | 0.15 % | 0.225 % | 0.225 % |
| vitamin B₆ | 0.57 mg | 0.05 % | 0.06 % | 0.05 % |
| vitamin B₁₂ | 0.28 µg | 0.025 % x 10⁻³ | 0.025 % x 10⁻³ | 0.0375 % x 10⁻³ |
| Folic acid | 62.5 µg | 0.005 % | 0.005 % | 0.0075 % |
| Biotin | 45 µg | 0.00375 % | 0.00375 % | 0.00375 % |
| Ascorbic acid | 17 mg | 1.5 % | 1.5 % | 1.5 % |
| Vitamin D₃ | 0.55 mg | 0.000125 % | 0.000125 % | 0.000187 % |
| Vitamin E | 8.2 mg | 0.25 % | 0.25 % | 0.375 % |
| 4-Phenylbutyrate sodium | 600 mg | 60% | 60 % | 60% |
| Excipients and salts | | 22.86 % | 22.56 % | 21.05 |
| | 600 mg | | | |
| **Total** | 1226 mg | 100 % | 100 % | 100 % |

### Example 4 - dietary supplement containing 4-PB in gel capsule form

The dietary supplement is provided in a 6 gel cap serving to be taken daily, preferably by a human male, for at least 2-3 weeks, preferably on an empty stomach, and comprises the following components per serving:
● Vitamin A 5000 IU
● Vitamin C 60 mg
● Vitamin E 30 IU
● Thiamin 1.5 mg
● Riboflavin 1.7 mg
● Niacin 20 mg
● Vitamin B-6 2 mg
● Folate 400 µg
● vitamin B-12 6 µg
● Biotin 300 µg
● Pantothenic acid 10 mg
● Zinc 15 mg
● Selenium 70 µg
● Sodium 4-phenylbutyrate 250 mg

Other ingredients: Rice Flour Powder, Magnesium Stearate, Silica

### LITERATURE

Archer, S. Y., and Hodin, R. A.: "Histone acetylation and cancer", Curr. Opin. Genet. Dev. 9: 171 -174, 1999
Dokmanovic, M., Clarke, C. and Marks, P.A.: "Histone deacetylase inhibitors: overview and perspectives," Molecular Cancer Research, vol. 5, no. 10, pp. 981-989, 2007.
Drummond, D.C. et al.: "Clinical development of histone deacetylase inhibitors as anticancer agents.", Ann. Rev. Pharmacol. Toxicol. 45: 495-528, 2005
Gallinari, P. et al.: "HDACs, histone deacetylation and gene transcription: from molecular biology to cancer therapeutics.", Cell Res 17: 195-211, 2007
Lea, M.A. et al.: "Inhibitory effects of tea extracts and (-)-epigallocatechin gallate on DNA synthesis and proliferation of hepatoma and erythroleukemia cells", Cancer Lett. 68: 231-236, 1993
Newmark, H. L., and Young, C. W.: "Butyrate and phenylacetate as differentiating agents: practical problems and opportunities" J. Cell. Biochem. , 22: 247 -253,1995
Parodi, P. W.: "Cows' milk fat components as potential anticarcinogenic agents", J. Nutr. , 127: 1055-1060, 1997
Stahl, P. H. and Wermuth, C.G., editors, Handbook of Pharmaceutical Salts: Properties, Selection and Use, Weinheim/Zürich:Wiley-VCH/VHCA, 2002
Valvic et al.: "Inhibitory effect of six green tea catechins and caffeine on the growth of four selected human tumor cell lines", 1996, Anticancer drugs 7: 461-468
Wightman, F. and Lighty, D.L.: "Identification of phenylacetic acid as natural auxin in the shoots of higher plants", Physiol. Plant. 55: 17-24, 1982.

## Claims

1. A non-pharmaceutical composition for oral administration comprising in a dosage unit, butyric acid and/or phenylacetic acid and/or its precursor 4-phenylbutyric acid and any salt, polymorph, hydrate or solvate thereof.

2. The non-pharmaceutical composition according to claim 1, wherein the form of the non-pharmaceutical composition is selected from the group consisting of a nutraceutical, a dietary supplement, a natural health product, nutritional supplement, a food supplement, an alternative medicine product, or a naturopathic product.

3. The non-pharmaceutical composition according claim 1 or 2, whose formulation is selected from the group consisting of a tablet, a powder, a suspension, an emulsion, a capsule, a granule, a troche, a lozenge, a tablet, a liquid, a spirit, a syrup, an elixir and a drink.

4. The non-pharmaceutical composition according to any of the above claims, wherein the dosage unit is administered in a dose of between 100 to 2000 mg of butyric acid, phenylacetic acid or 4-phenybutyric acid, preferably between 200 to 1000 mg, most preferably between 250 to 750 mg, and specifically 500 mg per subject per day.

5. The non-pharmaceutical composition according to any of the above claims, wherein the dosage unit contains phenylacetic acid.

6. The non-pharmaceutical composition according to claims 1 to 4, wherein the dosage unit contains 4-phenylbutyric acid.

7. The non-pharmaceutical composition according to claims 1 to 4, wherein the dosage unit contains butyric acid.

8. The non-pharmaceutical composition according to any of claims 1 to 7 further comprising one or more compounds selected from the group consisting of a flavoring, a sweetener, a nutritional ingredient, a botanical extract, and a coloring.

9. The non-pharmaceutical composition according to any of the above claims further comprising at least one portion of the group selected from a vitamin portion, a mineral portion and optionally an omega-3 fatty acid portion and wherein the content amounts of each of the selected vitamins, minerals and omega-3 fatty acid content are proportionally selected in accordance with the recommended daily amounts (RDA).

10. The non-pharmaceutical composition according to claim 9, wherein the vitamin portion comprises one or more vitamins selected from the group consisting of β-carotene, vitamin A, vitamin B₁, vitamin B₂, vitamin B₃, vitamin B₅, vitamin B₆, biotin, vitamin B₉, vitamin B₁₂, vitamin C, vitamin D, vitamin E and vitamin K.

11. The non-pharmaceutical composition according to any of the above claims for improving or maintaining health.

12. The non-pharmaceutical composition according to any of the claims 1 to 10 for use in preventing or delaying the onset of one or more age-related diseases or one or more age-associated declines.

13. The non-pharmaceutical composition according to claim 12, wherein the age-related disease is selected from the group consisting of Alzheimer's disease, cancer, diabetes, heart disease, macular degeneration and Parkinson's disease.

14. The non-pharmaceutical composition according to claim 12, wherein the age associated decline is selected from the group consisting of vision loss, hearing loss and memory loss.

15. Use of butyric acid and/or phenylacetic acid and/or its precursor 4-phenylbutyric acid and any salt, polymorph, hydrate or solvate thereof as a dietary supplement.
